# EUROPÄISCHE PATENTANMELDUNG

(11) **EP 1 120 526 A2**
(43) Veröffentlichungstag der Anmeldung: **01.08.2001**
(21) Anmeldenummer: 00124101.7
(22) Anmeldetag: 07.11.2000
(51) Int. Cl.: E05F 15/00, F16P 3/14

(54) **Schwenkbares Tor oder Fenster mit Mitteln zur Überwachung des Schwenkbereichs**

(30) Priorität: 28.01.2000 DE 10003746
(71) Anmelder: Valeo Schalter und Sensoren GmbH, 74321 Bietigheim-Bissingen (DE)
(72) Erfinder: Mathes, Joachim, 74080 Heilbronn (DE); Benz, Jürgen, 74354 Besigheim (DE)
(74) Vertreter: Dreiss, Fuhlendorf, Steimle & Becker

(57) **Zusammenfassung**

Die Erfindung betrifft ein motorisch betätigbares, durch eine Schwenkbewegung öffnendes Tor (2) oder Fenster, das Mittel zur Überwachung des Schwenkbereichs auf Hindernisse (7) aufweist, wobei das Tor (2) oder Fenster einen Tor- oder Fensterrahmen (3) und mindestens einen Tor- oder Fensterflügel (4) umfasst. Um auf möglichst kostengünstige Weise eine zuverlässige Überwachung des Schwenkbereichs zu ermöglichen, wird vorgeschlagen, dass die Mittel zur Überwachung des Schwenkbereichs als eine Ultraschallsensorik mit mindestens einem an dem Tor- oder Fensterflügel (4) befestigten Ultraschallsensor (8) ausgebildet sind.

## Beschreibung

Die vorliegende Erfindung betrifft ein motorisch betätigbares, durch eine Schwenkbewegung öffnendes Tor oder Fenster, das Mittel zur Überwachung des Schwenkbereichs auf Hindernisse aufweist. Das Tor oder Fenster umfasst einen Tor- oder Fensterrahmen und mindestens einen Tor- oder Fensterflügel. Die Erfindung betrifft außerdem ein Verfahren zum Überwachen des Schwenkbereichs eines motorisch betätigbaren, durch eine Schwenkbewegung öffnenden Tor- oder Fensterflügels auf Hindernisse.

Insbesondere bei Garagentoren hat eine motorische Betätigung in den letzten Jahren eine weite Verbreitung gefunden. Zum Öffnen oder Schließen eines Garagentors führt dieses in der Regel eine Schwenkbewegung nach oben aus. Um eine Kollision eines auf- oder zuschwenkenden Garagentors mit einem Hindernis, bspw. einem vor der Garage stehenden Kraftfahrzeug zu verhindern, muss der Schwenkbereich des Garagentors auf Hindernisse überwacht werden. Als Schwenkbereich wird im Sinne der vorliegenden Erfindung der Bereich verstanden, der von dem Tor- oder Fensterflügel während der Schwenkbewegung überstrichen wird. Zur Überwachung des Schwenkbereichs ist es aus dem Stand der Technik bekannt, außerhalb des Schwenkbereichs eine Lichtschranke anzuordnen. Sobald ein Hindernis die Lichtschranke unterbricht, wird die Schwenkbewegung des Garagentorflügels unterbrochen. Die Schwenkbewegung kann entweder fortgesetzt werden, sobald das Hindernis den Bereich der Lichtschranke verlassen hat, oder aber unmittelbar nach der Unterbrechung in der entgegengesetzten Richtung fortgesetzt werden.

Lichtschranken als Mittel zur Überwachung des Schwenkbereiches eines Tor- oder Fensterflügels haben jedoch den Nachteil, dass sie in einem relativ großen Abstand zu dem eigentlichen Schwenkbereich angeordnet sein müssen, um ein in den Schwenkbereich hineinragendes Hindernis frühzeitig und mit einer ausreichenden Zuverlässigkeit detektieren zu können. Das führt dazu, dass eine Schwenkbewegung eines Tor- oder Fensterflügels unter Umständen auch dann unterbrochen wird, wenn ein Hindernis zwar die Lichtschranke unterbricht, sich aber noch außerhalb des Schwenkbereichs befindet. Andererseits können Hindernisse, die unterhalb oder oberhalb der Lichtschranke in den Schwenkbereich hineinragen, von der Lichtschranke nicht detektiert werden. In solchen Fällen kann es dann zu einer Kollision des Tor- oder Fensterflügels mit dem Hindernis kommen.

Aus dem Stand der Technik ist es des Weiteren bekannt, die Mittel zur Überwachung des Schwenkbereichs auf Hindernisse als ein mechanisches Schaltelement (vgl. DE 197 06 209 A1), als einen kapazitiven Näherungsschalter (vgl. DE 34 23 132 C1) oder als einen optischen Sensor (vgl. DE 31 02 874 C2) auszubilden. Aus der DE 196 53 026 A1 ist es des Weiteren bekannt, den Schwenkbereich eines Tor- oder Fensterflügels mittels einer CCD-Kamera zu überwachen. All diese aus dem Stand der Technik bekannten Mittel zur Überwachung des Schwenkbereichs haben jedoch den Nachteil, dass sie entweder Hindernisse nicht mit einer ausreichend großen Zuverlässigkeit detektieren können, oder aber einen umfangreichen und komplizierten Aufbau aufweisen und deshalb relativ teuer sind.

Der vorliegenden Erfindung liegt die Aufgabe zugrunde, den Schwenkbereich eines Tor- oder Fensterflügels einerseits mit einer besonders hohen Zuverlässigkeit, andererseits aber möglichst kostengünstig zu überwachen.

Zur Lösung dieser Aufgabe schlägt die Erfindung ausgehend von dem Tor oder Fenster der eingangs genannten Art vor, dass die Mittel zur Überwachung des Schwenkbereichs als eine Ultraschallsensorik mit mindestens einem an dem Tor- oder Fensterflügel befestigten Ultraschallsensor ausgebildet sind.

Ultraschallsensoren sind aus dem Bereich der Kraftfahrzeugtechnik bekannt, wo sie bspw. im Rahmen von Einparkhilfen oder intelligenten Geschwindigkeitsregelanlagen zur Bestimmung des Abstands des Kraftfahrzeugs zu einem Hindernis bzw. zu einem vorausfahrenden Kraftfahrzeug, und im Rahmen der Einbruchssicherung zur Überwachung des Innenraums eingesetzt werden. Ultraschallsensoren sind auch als Bewegungsmelder zur Innenraumüberwachung von Gebäuden weit verbreitet. Ultraschallsensoren ermöglichen eine äußerst zuverlässige Detektion von Hindernissen in ihrem Erfassungsbereich. Zudem sind sie relativ kleinbauend und können problemlos auch in älteren Toren oder Fenstern nachgerüstet werden. Mit Hilfe von Ultraschallsensoren kann der Schwenkbereich eines Tor- oder Fensterflügels zuverlässig und kostengünstig überwacht werden.

Besonders vorteilhaft bei dem erfindungsgemäßen Tor oder Fenster ist die Tatsache, dass die Ultraschallsensoren an dem Tor- oder Fensterflügel befestigt sind und der Schwenkbewegung folgen. Um eine zuverlässige Überwachung des gesamten Schwenkbereichs zu erzielen muss der Erfassungsbereich der Ultraschallsensoren somit nicht den gesamten Schwenkbereich abdecken. Es genügt vielmehr, wenn der Erfassungsbereich der Ultraschallsensoren einen kleinen, in Richtung der Schwenkbewegung vor dem Tor- oder Fensterflügel liegenden Abschnitt des Schwenkbereichs überwachen. Während der Schwenkbewegung des Tor- oder Fensterflügels überstreicht der Erfassungsbereich der Ultraschallsensoren dann den gesamten Schwenkbereich des Tor- oder Fensterflügels. Selbst in den Fällen, in denen der Tor- oder Fensterflügel keine reine Schwenkbewegung, sondern zusätzlich noch eine Tangentialbewegung ausführt, kann der gesamte Schwenkbereich von den an dem Tor- oder Fensterflügel befestigten Ultraschallsensoren problemlos überwacht werden.

Gemäß einer vorteilhaften Weiterbildung der vorliegenden Erfindung wird vorgeschlagen, dass der mindestens eine Ultraschallsensor zwischen der Seite des Tor- oder Fensterflügels, an der die Schwenkachse liegt, un der der Schwenkachse gegenüberliegenden Seite an dem Tor- oder Fensterflügel befestigt ist, wobei der Erfassungsbereich des Ultraschallsensors auf die der Schwenkachse gegenüberliegende Seite des Tor- oder Fensterflügels gerichtet ist. Die Schwenkachse des Tor- oder Fensterflügels muss während der Schwenkbewegung nicht notwendigerweise an derselben Position verbleiben. Häufig ist es der Fall, dass die Schwenkachse während der Schwenkbewegung zusätzlich eine translatorische Bewegung ausführt. Auf diese Weise kann bspw. ein aufgeschwenktes Garagentor unter die Decke oder entlang einer Wand der Garage eingefahren werden, damit es in geöffnetem Zustand nicht oder nur ein wenig aus der geöffneten Garage hervorsteht. Gemäß dieser Weiterbildung wird insbesondere die für die Überwachung des Schwenkbereichs besonders interessante, der Schwenkachse gegenüberliegende Seite des Tor- oder Fensterflügels überwacht.

Gemäß einer bevorzugten Ausführungsform der vorliegenden Erfindung wird vorgeschlagen, dass der mindestens eine Ultraschallsensor derart an dem Tor- oder Fensterflügel befestigt ist, dass die Grundfläche des kegelförmigen Erfassungsbereichs die der Schwenkachse gegenüberliegende Seite des Tor- oder Fensterflügels zumindest teilweise abdeckt. Der mindestens eine Ultraschallsensor ist vorteilhafterweise derart an dem Tor- oder Fensterflügel befestigt, dass eine Längskante auf der Seitenfläche des kegelförmigen Erfassungsbereichs deckungsgleich auf oder parallel zu der Oberfläche des Tor- oder Fensterflügels verläuft. Mit derart an dem Tor- oder Fensterflügel befestigten Ultraschallsensoren kann der kegelförmige Erfassungsbereich der Ultraschallsensoren optimal ausgenutzt werden, um einen möglichst großen Abschnitt des Schwenkbereichs zu überwachen.

Gemäß einer anderen vorteilhaften Weiterbildung der vorliegenden Erfindung wird vorgeschlagen, dass der mindestens eine Ultraschallsensor an der der Schwenkachse gegenüberliegenden Seite an dem Tor- oder Fensterflügel befestigt ist, wobei der Erfassungsbereich des Ultraschallsensors in Richtung der Schwenkbewegung gerichtet ist. Der mindestens eine Ultraschallsensor ist vorteilhafterweise derart an dem Tor- oder Fensterflügel befestigt, dass eine Längskante auf der Seitenfläche des kegelförmigen Erfassungsbereichs die während der Schwenkbewegung von der der Schwenkachse gegenüberliegenden Seite des Tor- oder Fensterflügels aufgespannte Begrenzungsfläche des Schwenkbereichs zumindest teilweise abdeckt.

Um eine möglichst umfassende Überwachung des Schwenkbereichs des Tor- oder Fensterflügels zu erzielen, wird gemäß einer bevorzugten Ausführungsform der vorliegenden Erfindung vorgeschlagen, dass so viele Ultraschallsensoren nebeneinander angeordnet sind, dass die Erfassungsbereiche der Ultraschallsensoren die der Schwenkachse gegenüberliegende Seite des Tor- oder Fensterflügels vollständig abdecken.

Um eine Überwachung des Schwenkbereichs sowohl beim Aufschwenken als auch beim Zuschwenken des Tor- oder Fensterflügels zu ermöglichen, wird gemäß einer weiteren bevorzugten Ausführungsform der vorliegenden Erfindung vorgeschlagen, dass die Ultraschallsensorik mindestens einen an der Innenseite des Tor- oder Fensterflügels und mindestens einen weiteren an der Außenseite befestigten Ultraschallsensor umfasst.

Zur Lösung der Aufgabe der vorliegenden Erfindung wird ausgehend von dem Verfahren der Eingangs genannten Art des Weiteren vorgeschlagen, dass der Schwenkbereich mittels einer Ultraschallsensorik überwacht wird, die mindestens einen an dem Tor- oder Fensterflügel befestigten Ultraschallsensor umfasst.

Gemäß einer bevorzugten Weiterbildung der vorliegenden Erfindung wird vorgeschlagen, dass der Erfassungsbereich der Ultraschallsensoren so groß gewählt wird, dass bei einer vorgegebenen Geschwindigkeit der Schwenkbewegung ein Hindernis in dem Schwenkbereich erkannt und der Tor- oder Fensterflügel vor Erreichen des Hindernisses angehalten werden kann.

Im Folgenden werden bevorzugte Ausführungsbeispiele der vorliegenden Erfindung anhand der Zeichnungen näher erläutert. Es zeigen:
- Figur 1: ein erfindungsgemäßes Garagentor gemäß einer ersten bevorzugten Ausführungsform in einer Seitenansicht im Schnitt;
- Figur 2: ein erfindungsgemäßes Garagentor gemäß einer zweiten bevorzugten Ausführungsform in einer Seitenansicht im Schnitt;
- Figur 3: das Garagentor aus Figur 1 in einer Ansicht von außen;
- Figur 4: das Garagentor aus Figur 1 beim Öffnen; und
- Figur 5: das Garagentor aus Figur 1 beim Schließen.

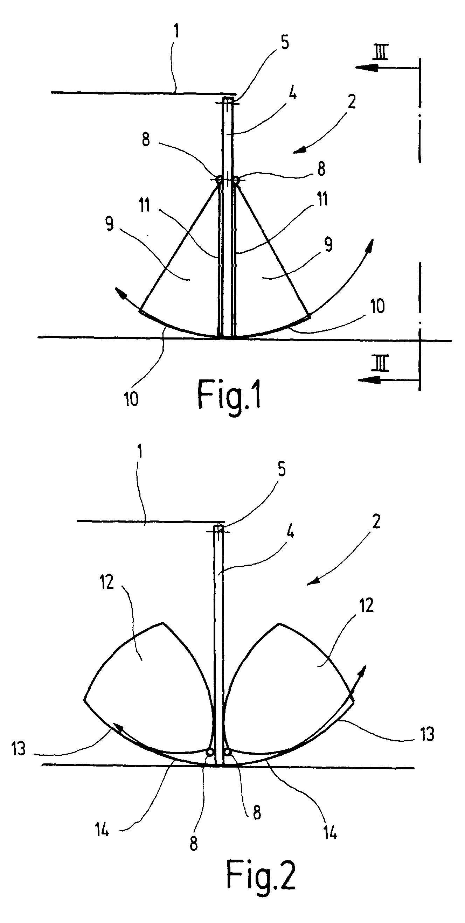

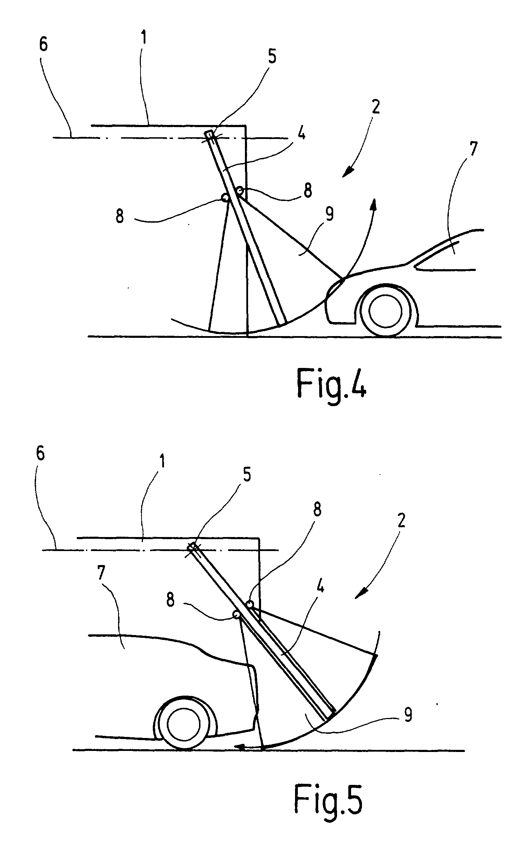

In Figur 1 ist eine Garage 1 ausschnittsweise dargestellt. An der in Figur 1 dargestellten Seite der Garage 1 ist ein Garagentor 2 ausgebildet, das einen Garagentorrahmen 3 und einen Garagentorflügel 4 umfasst. Zum Öffnen und Schließen des Garagentors 2 kann der Garagentorflügel 4 um eine Schwenkachse 5 auf- bzw. zugeschwenkt werden. Während der Schwenkbewegung des Garagentorflügels 4 bleibt die Schwenkachse 5 nicht an derselben Position, sondern führt vielmehr eine translatorische Bewegung entlang einer Bewegungsgeraden 6 aus (vgl. Figuren 4 und 5).

Das Garagentor 2 ist motorisch betätigt. Der Garagentorflügel 4 wird bspw. auf ein Signal einer Funkfernbedienung oder eines mit einem Schlüssel betätigbaren elektrischen Schlosses hin, auf- bzw. zugeschwenkt. Um während der Schwenkbewegung eine Kollision des Garagentorflügels 4 mit einem Hindernis 7 zu vermeiden, weist das Garagentor 2 eine Ultraschallsensorik mit 8 an dem Garagentorflügel 4 befestigten Ultraschallsensoren 8 auf.

Jeweils vier der Ultraschallsensoren 8 sind nebeneinander in einer Reihe an der Außenseite des Garagentorflügels 4 bzw. an der Innenseite des Garagentorflügels 4 befestigt.

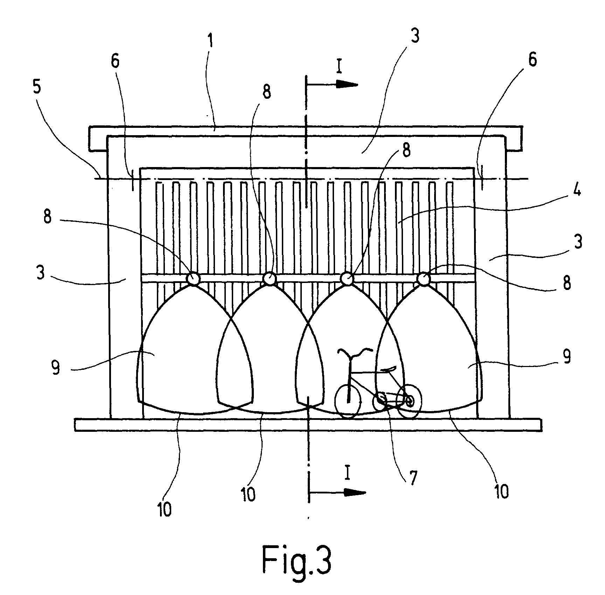

Durch die vier Ultraschallsensoren 8 auf der Außenseite des Garagentorflügels 4 wird der Schwenkbereich beim Öffnen des Garagentors 2 überwacht (vgl. Figur 4). Durch die vier an der Innenseite des Garagentorflügels 4 befestigten Ultraschallsensoren 8 wird der Schwenkbereich während des Schließens des Garagentors 2 überwacht (vgl. Figur 5). In Figur 3 ist das Hindernis 7 als ein Kinderdreirad dargestellt.
In Figur 4 ist das Hindernis 7 als ein vor der Garage 1 im Schwenkbereich des Garagentorflügels 4 stehendes Kraftfahrzeug ausgebildet. In Figur 5 ist das Hindernis 7 als ein Kraftfahrzeug ausgebildet, das in der Garage 1 so dicht an dem Garagentor 2 steht, dass ein Schließen des Garagentorflügels 4 nicht möglich ist. Sobald das Hindernis 7 in dem Schwenkbereich des Garagentorflügels 4 detektiert wird, wird die Schwenkbewegung unterbrochen. Nach der Detektion des Hindernisses 7 kann entweder gewartet werden, bis das Hindernis 7 aus dem Schwenkbereich entfernt ist, oder aber die Schwenkbewegung kann unmittelbar nach der Unterbrechung in der entgegengesetzten Richtung fortgesetzt werden.

In den Figuren 1, 3, 4 und 5 ist eine erste Ausführungsform des erfindungsgemäßen Garagentors 2 dargestellt. Die Ultraschallsensoren 8 sind dabei zwischen der Seite des Garagentorflügels 4, an der die Schwenkachse 5 liegt, und der der Schwenkachse 5 gegenüberliegenden Seite an dem Garagentorflügel 4 befestigt. Der kegelförmige Erfassungsbereich 9 der Ultraschallsensoren 8 ist auf die der Schwenkachse 5 gegenüberliegende Seite des Garagentorflügels 4 gerichtet. Die Ultraschallsensoren 8 sind derart an dem Garagentorflügel 4 befestigt, dass die Grundflächen 10 der Erfassungsbereiche 9 die der Schwenkachse 5 gegenüberliegende Seite des Garagentorflügels 4 vollständig abdecken (vgl. Figur 3). Außerdem verlaufen die Längskanten 11 auf den Seitenflächen der Erfassungsbereiche 9 deckungsgleich auf bzw. parallel zu der Oberfläche des Garagentorflügels 4 (vgl. Figur 1).

In Figur 2 ist eine alternative Ausführungsform der vorliegenden Erfindung dargestellt, wobei die Ultraschallsensoren 8 an der der Schwenkachse 5 gegenüberliegenden Seite an dem Garagentorflügel 4 befestigt sind. Die im Wesentlichen kegelförmigen Erfassungsbereiche 12 der Ultraschallsensoren 8 sind in Richtung der Schwenkbewegung gerichtet. Genauer gesagt, sind die an der Außenseite des Garagentorflügels 4 befestigten Ultraschallsensoren in Richtung der Schwenkbewegung beim Öffnen des Garagentorflügels 4 und die an der Innenseite des Garagentorflügels 4 befestigten Ultraschallsensoren 8 in Richtung der Schwenkbewegung beim Schließen des Garagentorflügels 4 gerichtet. Die Längskanten 13 der Seitenflächen der nahezu kegelförmigen Erfassungsbereiche 12 decken eine Begrenzungsfläche 14 des Schwenkbereiches ab, die während der Schwenkbewegung von der der Schwenkachse 5 gegenüberliegenden Seite des Garagentorflügels 4 aufgespannt wird.

## Patentansprüche

1. Motorisch betätigbares, durch eine Schwenkbewegung öffnendes Tor (2) oder Fenster, das Mittel zur Überwachung des Schwenkbereichs auf Hindernisse (7) aufweist, wobei das Tor (2) oder Fenster einen Tor- oder Fensterrahmen (3) und mindestens einen Tor- oder Fensterflügel (4) umfasst, **dadurch gekennzeichnet**, dass die Mittel zur Überwachung des Schwenkbereichs als eine Ultraschallsensorik mit mindestens einem an dem Tor- oder Fensterflügel (4) befestigten Ultraschallsensor (8) ausgebildet sind.

2. Tor (2) oder Fenster nach Anspruch 1, dadurch gekennzeichnet, dass der mindestens eine Ultraschallsensor (8) zwischen der Seite des Tor- oder Fensterflügels (4), an der die Schwenkachse (5) liegt, und der der Schwenkachse (5) gegenüberliegenden Seite an dem Tor- oder Fensterflügel (4) befestigt ist, wobei der Erfassungsbereich (9) des Ultraschallsensors (8) auf die der Schwenkachse (5) gegenüberliegende Seite des Tor- oder Fensterflügels (4) gerichtet ist.

3. Tor (2) oder Fenster nach Anspruch 2, dadurch gekennzeichnet, dass der mindestens eine Ultraschallsensor (8) derart an dem Tor- oder Fensterflügel (4) befestigt ist, dass die Grundfläche (10) des kegelförmigen Erfassungsbereichs (9) die der Schwenkachse (5) gegenüberliegende Seite des Tor- oder Fensterflügels (4) zumindest teilweise abdeckt.

4. Tor (2) oder Fenster nach Anspruch 2 oder 3, dadurch gekennzeichnet, dass der mindestens eine Ultraschallsensor (8) derart an dem Tor- oder Fensterflügel (4) befestigt ist, dass eine Längskante (11) auf der Seitenfläche des kegelförmigen Erfassungsbereichs (9) deckungsgleich auf oder parallel zu der Oberfläche des Tor- oder Fensterflügels (4) verläuft.

5. Tor (2) oder Fenster nach Anspruch 1, dadurch gekennzeichnet, dass der mindestens eine Ultraschallsensor (8) an der der Schwenkachse (5) gegenüberliegenden Seite an dem Tor- oder Fensterflügel (4) befestigt ist, wobei der Erfassungsbereich (12) des Ultraschallsensors (8) in Richtung der Schwenkbewegung gerichtet ist.

6. Tor (2) oder Fenster nach Anspruch 5, dadurch gekennzeichnet, dass der mindestens eine Ultraschallsensor (8) derart an dem Tor- oder Fensterflügel (4) befestigt ist, dass eine Längskante (13) auf der Seitenfläche des kegelförmigen Erfassungsbereichs (12) die während der Schwenkbewegung von der der Schwenkachse (5) gegenüberliegenden Seite des Tor- oder Fensterflügels (4) aufgespannte Begrenzungsfläche (14) des Schwenkbereichs zumindest teilweise abdeckt.

7. Tor (2) oder Fenster nach einem der Ansprüche 2 bis 6, dadurch gekennzeichnet, dass so viele Ultraschallsensoren (8) nebeneinander angeordnet sind, dass die Erfassungsbereiche (9; 12) der Ultraschallsensoren (8) die der Schwenkachse (5) gegenüberliegende Seite des Tor- oder Fensterflügels (4) vollständig abdecken.

8. Tor (2) oder Fenster nach einem der Ansprüche 1 bis 7, dadurch gekennzeichnet, dass die Ultraschallsensorik mindestens einen an der Innenseite des Tor- oder Fensterflügels (4) und mindestens einen weiteren an der Außenseite befestigten Ultraschallsensor (8) umfasst.

9. Verfahren zum Überwachen des Schwenkbereichs eines motorisch betätigbaren, durch eine Schwenkbewegung öffnenden Tor- oder Fensterflügels (4) auf Hindernisse
